# EUROPEAN PATENT APPLICATION

(11) **EP 4 528 998 A1**
(43) Date of publication of application: **26.03.2025**
(21) Application number: 24174135.4
(22) Date of filing: 03.05.2024
(51) Int. Cl.: H02K 11/225, H02K 7/116, H02K 11/33, H02K 7/00, H02K 5/16

(54) **POWERTRAIN ASSEMBLY, CHASSIS AND VEHICLE**

(30) Priority: 21.09.2023 CN 202311228418
(71) Applicant: Xiaomi EV Technology Co., Ltd., 100176 Beijing (CN)
(72) Inventor: XIE, Lier, Beijing, 100176 (CN); YAN, Yiquan, Beijing, 100176 (CN); GAO, Yemeng, Beijing, 100176 (CN)
(74) Representative: Dehns Germany Partnerschaft mbB

(57) **Abstract**

The disclosure relates to a powertrain assembly, a chassis and a vehicle. The powertrain assembly includes a motor (1), a motor position sensor (4), a first rotary shaft (2) and an electronic control assembly (3), where the motor position sensor (4) is configured to monitor a position of the motor and includes a sensor rotor (41) and a sensor stator (42); a first end of the first rotary shaft (2) is connected to the motor (1), and the sensor rotor (41) is arranged at a second end of the first rotary shaft (2); and the sensor stator (42) is arranged in the electronic control assembly,(3) and the second end of the first rotary shaft (2) is in the electronic control assembly (3).

## Description

### TECHNICAL FIELD

The disclosure relates to the technical field of vehicles, particularly powertrain assembly, chassis, and vehicle manufacturing.

### BACKGROUND OF THE INVENTION

A powertrain of a vehicle that applies a motor drive generally includes a motor, a motor position sensor and an electronic control assembly. In the related art, the motor position sensor and the electronic control assembly are commonly arranged at opposite sides of the motor in the direction of an axle respectively, and are connected to each other through a wiring harness.

The powertrain assembly is mounted on a subframe as a rule. Since the axial mounting space is additionally occupied by the motor position sensor, the axial size of the drive assembly expands. But due to limitation of the width of a wheel track of the vehicle, the size of the subframe in the direction of the axle is limited. In view of that, the design of the powertrain assembly in the related art is not conducive to optimizing the spatial layout of the vehicle and saving costs.

### SUMMARY OF THE INVENTION

In order to overcome the problems in the related art, the disclosure provides a powertrain assembly, a chassis and a vehicle.

According to a first aspect of an example of the disclosure, a powertrain assembly is provided. The powertrain assembly includes:
a motor;
a motor position sensor, configured to monitor a position of the motor, includes a sensor rotor and a sensor stator;
a first rotary shaft, where a first end of the first rotary shaft is connected to the motor, and the sensor rotor is arranged at a second end of the first rotary shaft; and
an electronic control assembly, where the sensor stator is arranged in the electronic control assembly, and the second end of the first rotary shaft is in the electronic control assembly.

Optionally, the sensor rotor and the first rotary shaft are constructed as an integrated structure.

Optionally, the electronic control assembly includes a circuit board, and the sensor stator is a coil structure arranged on the circuit board.

Optionally, the coil structure includes an excitation coil etching layer and an induction coil etching layer in a stacked form.

Optionally, the induction coil etching layer includes a first induction coil etching layer and a second induction coil etching layer in a stacked form, wherein one of the first induction coil etching layer and the second induction coil etching layer is configured to induce a sinusoidal signal, and an other one of the first induction coil etching layer and the second induction coil etching layer is configured to induce a cosinoidal signal.

Optionally, the electronic control assembly is arranged at a side, facing the second end of the first rotary shaft, of the powertrain assembly.

Optionally, the powertrain assembly further includes a housing, where the housing includes a first accommodation cavity and a second accommodation cavity that are separated, the first accommodation cavity configured to accommodate the motor and the second accommodation cavity configured to accommodate the electronic control assembly, and an opening for the second end of the first rotary shaft to pass through is on a separation wall between the first accommodation cavity and the second accommodation cavity.

Optionally, the opening corresponds to the sensor stator in position.

Optionally, a sealing component configured to seal the opening is on the opening.

Optionally, a mounting bracket is on the separation wall, wherein the first rotary shaft is mounted on the mounting bracket through a bearing, and the mounting bracket extends from the separation wall to an interior of the first accommodation cavity.

Optionally, the motor includes a motor stator and a motor rotor, wherein the first rotary shaft is partially sleeved with the motor rotor and rotates coaxially along with rotation of the motor rotor.

Optionally, the powertrain assembly further includes a second rotary shaft connected to a wheel, where the second rotary shaft is arranged in parallel with the first rotary shaft, the second rotary shaft comprises a first half shaft and a second half shaft that are configured to be connected to wheels at two sides respectively, and a differential gear is arranged between the first half shaft and the second half shaft, the powertrain assembly further comprise at least one third rotary shaft, wherein the third rotary shaft is arranged between the first rotary shaft and the second rotary shaft, wherein the third rotary shaft is arranged in parallel with the first rotary shaft and the second rotary shaft, and wherein the first rotary shaft and the third rotary shaft are in transmission connection through a first gear pair, and the third rotary shaft (8) and the second rotary shaft are in transmission connection through a second gear pair.

Optionally, the motor position sensor is an eddy current position sensor.

According to a second aspect of the example of the disclosure, a chassis is provided. The chassis includes a frame and a powertrain assembly mounted on the frame, where the powertrain assembly is the powertrain assembly according to any one described above.

According to a third aspect of the example of the disclosure, a vehicle is provided. The vehicle includes the powertrain assembly according to any one described above or the chassis described above.

The technical solution according to the example of the disclosure has the following beneficial effects: in the powertrain assembly according to the disclosure, the motor position sensor is configured to include the sensor rotor and the sensor stator that are separated, the sensor rotor is integrated on the first rotary shaft, and the sensor stator is integrated into the electronic control assembly. Since an integrated motor position sensor is canceled, and the sensor rotor and the sensor stator are integrated into existing components of the powertrain assembly respectively, there is no need to reserve an additional axial mounting space for the sensor, an axial size of the powertrain assembly is reduced, an overall weight of the powertrain assembly can be reduced, and spatial layout of the vehicle is facilitated. In addition, since the sensor stator is integrated into the electronic control assembly, there is no need to use a long wiring harness for a connection between a sensor and an electronic control assembly that are arranged at two sides of a motor in the related art, thereby avoiding electromagnetic interference caused by the overlong wiring harness, saving additional electromagnetic shielding measures, and reducing cost.

### BRIEF DESCRIPTION OF DRAWINGS

The drawings here are incorporated into the description as a constituent part of the description, illustrate examples conforming to the disclosure, and serve to explain principles of the disclosure along with the description.
Fig. 1 is a schematic structural diagram of a powertrain assembly according to an example.
Fig. 2 is a schematic diagram of a motor rotor according to an example.
Fig. 3 is a schematic diagram of a first rotary shaft according to an example.
Fig. 4 is a schematic diagram of a sensor stator according to an example.
Fig. 5 is a schematic diagram of spatial layout of a powertrain assembly on a frame in the related art.

### DETAILED DESCRIPTION OF THE INVENTION

Examples will be described in detail here, and their instances are shown in the accompanying drawings. When the following description involves the accompanying drawings, the same numerals in different accompanying drawings indicate the same or similar elements unless otherwise indicated. Embodiments described in the following examples do not represent all embodiments consistent with the disclosure. On the contrary, these embodiments are merely instances of apparatuses and methods consistent with some aspects of the disclosure as detailed in the appended claims.

Unless otherwise stated, orientation words such as "up, down, left and right" are defined according to directions indicated in the corresponding accompanying drawings, and "inside" and "outside" indicate interiors and exteriors of contours of corresponding parts. In addition, the terms "first", "second", etc. used in the disclosure are used to distinguish one element from another, but not indicate sequence or importance.

It should be noted that all actions for acquiring signals, information or data in the disclosure are taken under the premise of complying with corresponding data protection laws and policies of the local country and acquiring authorization from a corresponding apparatus owner.

In the related art, since an output end of a rotary shaft of a motor needs to be connected to reducer shafting to form a motor and a reducer shafting system, a motor position sensor is usually arranged at a non-output end of the rotary shaft of the motor. That is, based on the related art, a person skilled in the art usually does not consider arranging, at the output end of the rotary shaft of the motor, the motor position sensor that is integrally constructed. In addition, in order to avoid the electromagnetic interference produced by a motor rotor and a motor stator on an electronic control assembly, which may affect the normal operation of the electronic control assembly, the electronic control assembly generally needs to be arranged at a side of a reducer, that is, a side of the output end of the motor rotor. In this way, a motor position sensor is far away from the electronic control assembly and needs to be connected through a long wire. As a result, a high cost is caused, and since the sensor and the electronic control assembly are located at two ends of the motor, a large space of a vehicle is occupied.

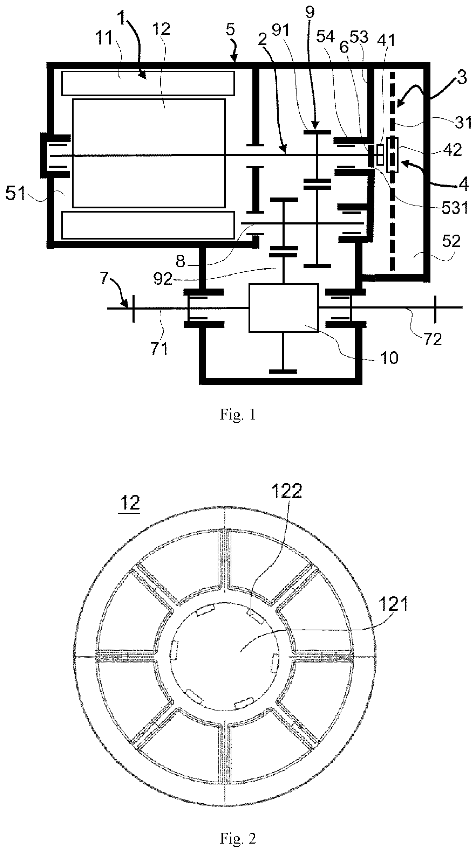

In the disclosure, as shown in Fig. 1, a sensor rotor 41 is arranged at an output end of a rotary shaft of a motor 1, and a sensor stator 42 is arranged in an electronic control assembly 3. Indeed, a motor position sensor 4 is arranged at the output end of the rotary shaft of the motor 1, and no teaching of a separated motor position sensor 4 is provided in the related art. As a result, traditional cognition of a person skilled in the art on a position of the motor position sensor 4 is broken through, and an axial size of the powertrain assembly is further reduced.

In some examples, as shown in Figs. 1-4, the disclosure illustratively provides a powertrain assembly. The powertrain assembly includes a motor 1, a motor position sensor 4 configured to monitor a position of the motor 1, a first rotary shaft 2 and an electronic control assembly 3. The motor position sensor 4 includes a sensor rotor 41 and a sensor stator 42. A first end of the first rotary shaft 2 is connected to the motor 1, and the sensor rotor 41 is arranged at a second end of the first rotary shaft 2. The sensor stator 42 is arranged in the electronic control assembly 3, and the second end of the first rotary shaft 2 is located in the electronic control assembly 3. It should be noted that the first rotary shaft 2, that is, the input shaft, is configured to input power of the motor 1 into a wheel end, so as to drive the wheel. The motor position sensor 4 is configured to monitor parameters such as a rotational speed, a rotational angle and a torque of the motor. In some examples, the motor position sensor 4 is configured to monitor parameters such as a rotational speed, a rotational angle and a torque of the motor rotor 41. The electronic control assembly 3 can control the motor 1 more accurately according to position information monitored of the motor 1.

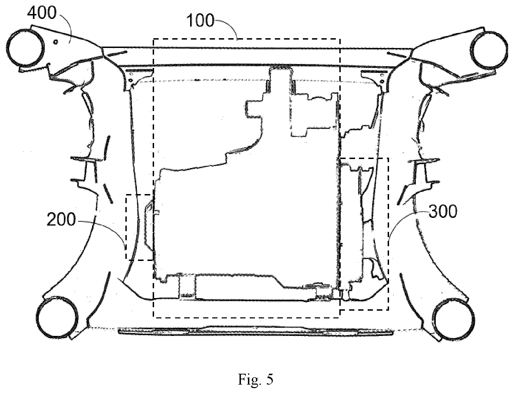

Fig. 5 is a schematic diagram of spatial layout of a powertrain assembly on a frame 400 in the related art. The sensor 200 as an integrated component is arranged at one side, in a direction of an axle, of motor and reducer shafting 100, an electronic control unit 300 is generally arranged at the other side, in the direction of the axle, of the motor and reducer shafting 100, and the sensor 200 and the electric control unit 300 are connected through a wiring harness. The powertrain assembly is arranged on a frame 400 as a rule. Since the axial mounting space is additionally occupied by the sensor 200, the axial size of the drive assembly expands. But due to limitation of a width of a wheel track of the vehicle, the size of the frame 400 in the direction of the axle is limited. In view of that, the design of the powertrain assembly in the related art is not conducive to optimization of the spatial layout of the vehicle and cost saving.

In the powertrain assembly provided by the disclosure, the motor position sensor 4 is configured to include a separate sensor rotor 41 and a split-type sensor stator 42, which are different from the integrated motor position sensor in the related art. Through the sensor rotor 41 and the sensor stator 42, which are separated, an additional mounting space for motor position sensor 4 is canceled from the aspect of the mounting space. Instead, the sensor rotor 41 and the sensor stator 42 that are separated are integrated into existing components of the powertrain assembly respectively. In some examples, the sensor rotor 41 is integrated into the first rotary shaft 2 and the sensor stator 42 is integrated into the electronic control assembly 3, thus the position of the motor 1 can still be monitored. In this way, since there is no need to reserve an additional axial mounting space for the motor position sensor 4, an axial size of the drive assembly is reduced, an overall weight of the powertrain assembly is reduced, and spatial layout of the vehicle is facilitated.

The sensor stator 42 is integrated into the electronic control assembly 3, and there is no need to connect a motor position sensor 200 and an electronic control unit 300 by a long wiring harness that are arranged at two sides of a motor and reducer shafting 100 just like in the related art, thereby avoiding electromagnetic interference caused by the overlong wiring harness, saving additional electromagnetic shielding measures, and reducing cost.

Since the first rotary shaft 2 is driven by the motor 1 to rotate at a high speed, the sensor rotor 41 and the first rotary shaft 2 may be constructed as an integrated structure to ensure monitoring reliability of the sensor rotor 41. In some examples, a feature of the sensor rotor 41 may be directly processed at the second end of the first rotary shaft 2, for example, the feature of the sensor rotor 41 may be directly processed at the second end of the first rotary shaft 2 through computer numerical control (CNC) machining. For cooperation between the sensor rotor 41 and the first rotary shaft 2 that rotate at high speeds, the sensor rotor 41 needs to be processed with high precision and has a size correspondingly increased, so as to ensure a mounting strength with the first rotary shaft 2. However, the sensor rotor 41 and the first rotary shaft 2 uses an integrated structure, there is no need to consider mounting precision, and the mounting strength can be ensured without increasing the size of the sensor rotor 41. In some other examples, the integrated structure between the sensor rotor 41 and the first rotary shaft 2 may also be implemented through bonding or interference fitting, which is not repeated in the disclosure.

In some examples, an eddy current position sensor may serve as the motor position sensor. Such a sensor has a flaky sensor rotor. A flaky rotor has a light weight and a small size so as to be arranged on the first rotary shaft 2 more advantageously. Thus, a weight of the first rotary shaft 2 is reduced, and a space taken up by the feature of the sensor rotor 41 in a second accommodation cavity 52 is reduced. In addition, the flaky rotor is easier to be processed on the first rotary shaft 2. It is clear that a different sensor that has the sensor rotor 41 and the sensor stator 42, such as a Hall sensor or a resolver, can also be applied to the disclosure.

The electronic control assembly 3 generally includes a circuit board 31. As an example of the sensor stator 42 of the disclosure, the sensor stator 42 may be a coil structure 420 arranged on the circuit board 31. With the eddy current position sensor as an example again, a stator of the eddy current sensor is processed by etching the coil structure 420 on the circuit board 31, and the existing circuit board function in the electronic control assembly 3 also needs to etch a coil structure 420 for an internal connection. In this way, the sensor stator 42 can be processed by etching the coil structure 420 on the existing circuit board 31 of the electronic control assembly 3, that is, the sensor stator 42 is fused/integrated into the existing circuit board 31 by etching the coil structure 420. For example, an area for arranging the sensor stator 42 may be reserved on the circuit board 31, and then the coil structure 420 is arranged in the area reserved. By integrating the sensor stator 42 into the circuit board 31, the space of the electronic control assembly 3 is saved, and an axial space of the powertrain assembly is further saved. It is clear that an independent circuit board 31 that has a coil structure 420 may also be arranged in the electronic control assembly 3.

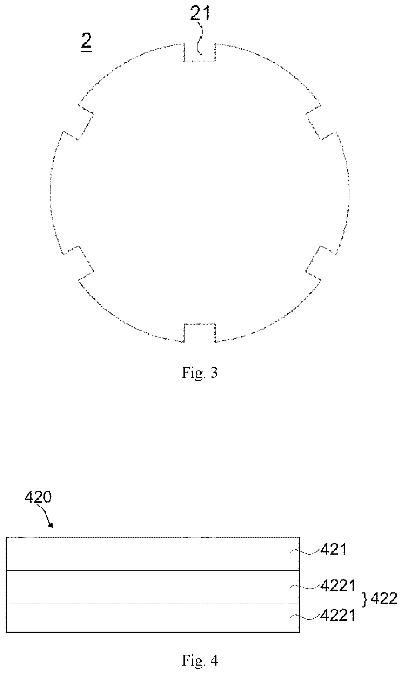

As shown in Fig. 4, the coil structure 420 may include an excitation coil etching layer 421 and an induction coil etching layer 422 in a stacked form. The excitation coil etching layer 421 receives an input excitation signal, and the induction coil etching layer 422 induces a monitoring signal according to a mutual angular position relation between the sensor rotor 41 and the sensor stator 42. Further, the induction coil etching layer 422 includes a first induction coil etching layer 4221 and a second induction coil etching layer 4222 in a stacked form, and one of the first induction coil etching layer 4221 and the second induction coil etching layer 4222 is configured to induce a sinusoidal signal, and the other one thereof is configured to induce a cosinusoidal signal. The excitation coil etching layer 421 receives the input excitation signal, and the first induction coil etching layer 4221 and the second induction coil etching layer 4222 induce monitoring signals that have a sine (sin) and a cosine (cos) according to the mutual angular position relation between the sensor rotor 41 and the sensor stator 42. Such redundant design that includes sinusoidal and cosinusoidal induced signals makes it possible to monitor the motor rotor 12 at any position within the entire range of 360°, such that monitoring precision and control precision of the motor 1 are improved.

As shown in Fig. 1, the electronic control assembly 3 may be arranged at a side (that is, a left side in the figure), facing the second end of the first rotary shaft 2, of the powertrain assembly. In this way, the second end of the first rotary shaft 2 can directly penetrate into the electronic control assembly 3 without any improvement in the first rotary shaft 2, for example, the first rotary shaft 2 does not need to bend to adapt to a position of the electronic control assembly 3, and a simple structure and a low development cost are achieved. It should be noted that according to actual demand, for example, according to a mounting space of a subframe, the electronic control assembly 3 may also be arranged at two sides in an axial direction of the first rotary shaft 2, that is, an up-and-down direction in the figure.

The powertrain assembly according to the disclosure further includes a housing 5. The housing 5 includes a first accommodation cavity 51 and second accommodation cavity 52 that are separated, the first accommodation cavity 5 configured to accommodate the motor 1, the second accommodation cavity 52 configured to accommodate the electronic control assembly 3. Through the arrangement of the first accommodation cavity 51 and the second accommodation cavity 52 that are separated, helps to avoid the interference of a reduction mechanism on the electronic control assembly 3. In addition, the second end of the first rotary shaft 2 is located in the second accommodation cavity 52, makes a closer axial distance between the sensor rotor 41 and the sensor stator 42, for example, the axial distance between the sensor rotor 41 and the sensor stator 42 falls within the range of 1 mm-3.5 mm. In this way, a function of the motor position sensor is guaranteed. The housing 5 may be assembled by two detachable housings, or use an integrated housing. Then, the housing is separated into the first accommodation cavity 51 and the second accommodation cavity 52 by a separation wall 53 between the first accommodation cavity 51 and the second accommodation cavity 52. The separation wall 53 is provided with an opening 531 for the second end of the first rotary shaft 2 to pass through.

In some examples, the opening 531 is in correspondence to the sensor stator 42 in position. The correspondence in position refers to alignment in position. In this way, the sensor rotor 41 arranged at the second end of the first rotary shaft 2 can be aligned with in position the sensor stator 42 after the first rotary shaft 2 penetrates into the electronic control assembly 3, and a monitoring effect of the motor position sensor is guaranteed. In addition, the opening 531 is further provided with a sealing member 6 configured to seal the opening 531. Since the motor 1 and a reducer are transmission component, the motor and the reducer are usually immersed in oil. By arranging the sealing member 6 at the opening 531, the condition that transmission is affected when the oil enters the electronic control assembly 3 or other impurities enter the first accommodation cavity 51 is avoided.

With further reference to Fig. 1, the separation wall 53 is provided with a mounting bracket 54, and the first rotary shaft 2 is mounted on the mounting bracket 54 through a bearing. In other words, the mounting bracket 54 is a bearing bracket. The mounting bracket 54 extends from the separation wall 53 to an interior of the first accommodation cavity 51. The mounting bracket 54 and the separation wall 53 may be integrally formed. Since a space in the first accommodation cavity 51 is generally larger than a space in the second accommodation cavity 52, the mounting bracket 54 extends towards the interior of first accommodation cavity 51. In this way, an internal space of the first accommodation cavity 51 can be fully used without increasing the axial size of the first accommodation cavity 51, and the space of the second accommodation cavity 52 can be further saved.

As shown in Fig. 1, the motor 1 includes a motor stator 11 and a motor rotor 12. The motor stator 11 is fixedly arranged on the housing 5, and the motor rotor 12 is rotatably arranged in the motor stator 11. The first rotary shaft 2 is partially sleeved with the motor rotor 12 and rotates coaxially along with rotation of the motor rotor 12. The first rotary shaft 2 is partially sleeved with the motor rotor 12, helps to save the axial space for mounting the first rotary shaft 2, and further helps to the axial space of the powertrain assembly. As an example of coaxial rotation of the first rotary shaft 2 with the motor rotor 12, with reference to Figs. 2 and 3, a plurality of convexes 122 are arranged in the motor rotor 12 at intervals in a circumferential direction of an inner wall, and correspondingly, a plurality of grooves 21 that may match, in a snap-fit manner, the convexes 122 are provided in an outer wall of the first rotary shaft 2 at intervals in a circumferential direction. The convexes 122 matches the grooves 21 to limit circumferential rotation of the first rotary shaft 2 relative to the motor rotor 12, such that the first rotary shaft 2 rotates coaxially along with rotation of the motor rotor 12.

The powertrain assembly may further include a second rotary shaft 7 connected to a wheel, where the second rotary shaft 7 is arranged in parallel with the first rotary shaft 2, and the second rotary shaft 7 and the first rotary shaft 2 are in transmission connection through a gear pair 9, that is, the powertrain assembly may use structural design of parallel shafts. The parallel arrangement of the rotary shafts for transmitting power is conducive to reduction of the axial size of the powertrain assembly. Further, the second rotary shaft 7 may include a first half shaft 71 and a second half shaft 72 that are connected to wheels at two sides respectively, and a differential gear 10 is arranged between the first half shaft 71 and the second half shaft 72. The differential gear 10 may be located between the two half shafts. Such coaxial transmission of driving force and symmetrical arrangement can avoid influence of noise, vibration and harshness (NVH) caused by the bias of the differential gear 10 and improve running stability.

The powertrain assembly may further include at least one third rotary shaft 8, where the third rotary shaft 8 is arranged between the first rotary shaft 2 and the second rotary shaft 7, the third rotary shaft 8 is arranged in parallel with the first rotary shaft 2 and the second rotary shaft 7, the first rotary shaft 2 and the third rotary shaft 8 are in transmission connection through a first gear pair 91, and the third rotary shaft 8 and the second rotary shaft 7 are in transmission connection through a second gear pair 92. By reasonably designing the transmission ratio between the first gear pair 91 and the second gear pair 92, a function of the reducer is implemented. In general, the reducer has functions of changing a speed and a torque. For example, the reducer can change a vehicle speed and improve a climbing capacity without adjusting a performance of the motor 1. In this way, the vehicle speed and the climbing capacity can be easily changed. Two second rotary shafts 7 are coaxially arranged, and drive the wheels on two sides respectively.

According to a second aspect of the example of the disclosure, a chassis is provided. The chassis includes a frame 400 and a powertrain assembly mounted on the frame 400. The frame may be a subframe, and the powertrain assembly is any powertrain assembly described above and has all the beneficial effects, which will not be repeated here.

According to a third aspect of the example of the disclosure, a vehicle is provided. The vehicle includes the powertrain assembly according to any one described above or the chassis described above.

## Claims

1. A powertrain assembly, comprising:
a motor (1);
a motor position sensor (4), configured to monitor a position of the motor, comprising a sensor rotor (41) and a sensor stator (42);
a first rotary shaft (2), wherein a first end of the first rotary shaft (2) is connected to the motor (1), and the sensor rotor (41) is arranged at a second end of the first rotary shaft (2); and
an electronic control assembly (3), wherein the sensor stator (42) is arranged in the electronic control assembly (3), and the second end of the first rotary shaft (2) is in the electronic control assembly (3).

2. The powertrain assembly according to claim 1, wherein the sensor rotor (41) and the first rotary shaft (2) are constructed as an integrated structure.

3. The powertrain assembly according to claim 1 or 2, wherein the electronic control assembly (3) comprises a circuit board (31), and the sensor stator (42) is a coil structure (420) arranged on the circuit board (31).

4. The powertrain assembly according to claim 3, wherein the coil structure (420) comprises an excitation coil etching layer (421) and an induction coil etching layer (422) in a stacked form.

5. The powertrain assembly according to claim 4, wherein the induction coil etching layer (422) comprises a first induction coil etching layer (4221) and a second induction coil etching layer (4222) in a stacked form, wherein one of the first induction coil etching layer (4221) and the second induction coil etching layer (4222) is configured to induce a sinusoidal signal, and another one of the first induction coil etching layer (4221) and the second induction coil etching layer(4222) is configured to induce a cosinusoidal signal.

6. The powertrain assembly according to any one of claims 1 to 5, wherein the electronic control assembly (3) is arranged at a side, facing the second end of the first rotary shaft (2), of the powertrain assembly (3).

7. The powertrain assembly according to any one of the preceding claims, further comprising a housing (5), wherein the housing (5) comprises a first accommodation cavity (51) and a second accommodation cavity (52) that are separated, the first accommodation cavity (51) configured to accommodate the motor (1) and the second accommodation cavity (52) configured to accommodate the electronic control assembly (3), and an opening (531) for the second end of the first rotary shaft (2) to pass through is on a separation wall (53) between the first accommodation cavity (51)and the second accommodation cavity (52).

8. The powertrain assembly according to claim 7, wherein the opening (531) corresponds to the sensor stator (42) in position.

9. The powertrain assembly according to claim 7 or 8, wherein a sealing component (6) configured to seal the opening (531) is on the opening (531).

10. The powertrain assembly according to any one of claims 7-9, wherein a mounting bracket (54) is on the separation wall (53), wherein the first rotary shaft (2) is mounted on the mounting bracket (54) through a bearing, and the mounting bracket (54) extends from the separation wall (53) to an interior of the first accommodation cavity (51).

11. The powertrain assembly according to any one of claims 1 to 10, wherein the motor (1) comprises a motor stator (11) and a motor rotor (12), wherein the first rotary shaft (2) is partially sleeved with the motor rotor (12) and rotates coaxially along with rotation of the motor rotor (12).

12. The powertrain assembly according to any one of claims 1 to 11, further comprising a second rotary shaft (7) configured to be connected to a wheel, wherein the second rotary shaft (7) is arranged in parallel with the first rotary shaft (2), the second rotary shaft (7) comprises a first half shaft (71) and a second half shaft (72) that are configured to be connected to wheels at two sides respectively, and a differential gear (10) is arranged between the first half shaft (71) and the second half shaft (72), the powertrain assembly further comprise at least one third rotary shaft (8), wherein the third rotary shaft (8) is arranged between the first rotary shaft (2) and the second rotary shaft (7), wherein the third rotary shaft (8) is arranged in parallel with the first rotary shaft (2) and the second rotary shaft (7), and wherein the first rotary shaft (2) and the third rotary shaft (8) are in transmission connection through a first gear pair (91), and the third rotary shaft (8) and the second rotary shaft (7) are in transmission connection through a second gear pair (92).

13. The powertrain assembly according to any one of claims 1 to 12, wherein the motor position sensor (4) is an eddy current position sensor.

14. A chassis, comprising a frame (400) and a powertrain assembly mounted on the frame (400), wherein the powertrain assembly is the powertrain assembly according to any one of claims 1-13.

15. A vehicle, comprising the powertrain assembly according to any one of claims 1 to 13 or the chassis according to claim 14.
